# EUROPÄISCHE PATENTANMELDUNG

(11) **EP 4 144 579 A1**
(43) Veröffentlichungstag der Anmeldung: **08.03.2023**
(21) Anmeldenummer: 22190122.6
(22) Anmeldetag: 12.08.2022
(51) Int. Cl.: B60N 2/40, H05B 3/12, B60N 2/56

(54) **POLSTERELEMENT UND VERFAHREN ZUR HERSTELLUNG DESSELBEN SOWIE VERWENDUNG**

(30) Priorität: 07.09.2021 DE 102021209848; 04.10.2021 DE 102021211134
(71) Anmelder: Benecke-Kaliko AG, 30419 Hannover (DE)
(72) Erfinder: Nassauer, Benjamin, 30165 Hannover (DE); Mikulski, Sebastian, 30165 Hannover (DE); Barho, Erhard, 30165 Hannover (DE)
(74) Vertreter: Continental Corporation

(57) **Zusammenfassung**

Die Erfindung betrifft ein Polsterelement (1), umfassend einen aus einem Formschaum gebildeten Korpus (10), der sichtseitig mit einem Bezug (12) überzogen ist, wobei auf den Korpus (10) unterhalb des Bezugs (12) eine elektrisch leitende Funktionsschicht (11) haftfest aufgebracht ist, die mittels Elektroden kontaktierbar ist und von einer elektrisch nicht leitenden Trägerfolie und auf die Trägerfolie gedruckten und aushärtend getrockneten Leiterbahnen aus mindestens einer elektrisch leitfähigen Paste gebildet ist. Es wird ferner auch ein Verfahren zur Herstellung eines derartigen Polsterelements sowie dessen Verwendung angegeben.

## Beschreibung

Die Erfindung betrifft ein Polsterelement, umfassend einen aus einem Formschaum gebildeten Korpus, der sichtseitig mit einem Bezug überzogen ist.

Polsterelemente der eingangs genannten Art sind vielfältig bekannt und werden beispielsweise zur Ausbildung von Motorradsitzen und Motorradsitzbänken verwendet. Sofern die Polsterelemente beheizt werden sollen, werden insbesondere bei Motorrädern standardmäßig Drahtheizungen eingesetzt, d. h. im Bereich des Bezugs oder darunterliegend werden Drahtgewebe eingearbeitet, die bei Beaufschlagung mit elektrischem Strom als Widerstandsheizung arbeiten und sich erwärmen. Des Weiteren kommen Heizfolien zum Einsatz, die jedoch sehr steif sind, was dem Komfort abträglich ist. Mit vergleichbaren Aufbauten werden auch Sensoren und andere elektrische Funktionselemente realisiert.

Diese vorgenannten Funktionselemente vermindern den Sitzkomfort und müssen durch eine zusätzliche Schaumschicht abgepolstert werden. Eine Schaumschicht zwischen dem Heizelement und der zu beheizenden Oberfläche vermindert jedoch die Heizleistung. Im Falle der Ausbildung von Sensoren kann sich eine solche Schaumschicht ebenfalls negativ auf das Messergebnis auswirken.

Es ist daher bereits vorgeschlagen worden, sehr dünne Drähte oder besonders weiche elektrische Funktionsfolien in das Bezugsmaterial zu integrieren. Dies führt jedoch zu Schwierigkeiten bei der Kontaktierung, insbesondere wenn der Bezug ein komplexes Nähbild mit vielen einzelnen Stücken und Nähten aufweist.

Aus der EP 3085198B1 ist darüber hinaus ein elektrisch heizbares Flächenelement für einen Fahrzeugsitz bekannt, bei der auf eine elektrisch nicht leitende Trägerschicht eine elektrisch leitfähige und als Widerstandsheizung ausgebildete Beschichtung aufgebracht wird, die von einer elektrisch leitfähigen Paste gebildet wird, welche auf die Trägerschicht aufgedruckt wird. Dabei wird ein Druckmuster in Form einer Netz- oder Gitterstruktur verwendet, um ein universelles und als Rollenware bereitgestelltes Flächenelement zu erhalten, welches nach Zuschnitt und entsprechender Kontaktierung mittels Elektroden als Heizung einsetzbar wird. Dieses bekannte Flächenelement kann beispielsweise unterhalb eines aus einem Kunstleder gebildeten Bezuges angeordnet werden. Auch hierbei gestaltet sich allerdings die Anordnung der für die Kontaktierung benötigten Elektroden problematisch und erfordert gestalterisch unerwünschte Beschränkungen insbesondere in Bezug auf Nahtverläufe des Bezugs

Aufgabe der Erfindung ist es daher, ein Polsterelement der eingangs genannten Art vorzuschlagen, welches die Nachteile des Standes der Technik überwindet.

Zur Lösung der gestellten Aufgabe wird erfindungsgemäß die Ausgestaltung eines Polsterelements gemäß den kennzeichnenden Merkmalen des Patentanspruches 1 vorgeschlagen.

Ein Verfahren zur Herstellung eines solchen Polsterelementes ist Gegenstand des Patentanspruchs 8.

Vorteilhafte Ausgestaltungen und Weiterbildungen der Erfindung sind Gegenstand der abhängigen Ansprüche.

Erfindungsgemäß wird vorgeschlagen, dass auf den aus einem Formschaum gebildeten Korpus unterhalb des Bezugs eine elektrisch leitende Funktionsschicht haftfest aufgebracht ist, die mittels Elektroden kontaktierbar ist und von einer elektrisch nichtleitenden Trägerfolie und auf die Trägerfolie gedruckten und aushärtend getrockneten Leiterbahnen aus mindestens einer elektrisch leitfähigen Paste gebildet ist.

Erfindungsgemäß wird somit die Funktionsschicht vom Bezug entkoppelt, wodurch die Kontaktierung unabhängig von der Anordnung und dem Verlauf der Nähte erheblich vereinfacht wird. In Anpassung an den jeweils individuell vorliegenden Korpus wird eine dazu passende elektrisch leitende Funktionsschicht mit angepasstem Verlauf der Leiterbahnen auf eine nichtleitende Trägerfolie gedruckt, wozu mindestens eine an sich bekannte, am Markt verfügbare leitfähige Paste verarbeitet wird. Nachdem die gedruckten Leiterbahnen aus der elektrisch leitfähigen Paste durch Trocknen ausgehärtet sind, wird die solchermaßen gebildete elektrisch leitende Funktionsschicht haftfest auf den Korpus aufgebracht, zum Beispiel durch Kaschieren und befindet sich somit als verbundene Einheit auf der Oberfläche des Korpus unmittelbar unter dem Bezug.

Anschließend kann der Korpus mit der haftfest darauf aufgebrachten elektrisch leitenden Funktionsschicht in an sich bekannter Weise mit dem Bezug überzogen werden, der den Korpus und die aufgebrachte Funktionsschicht sichtseitig überdeckt.

Im Falle der Ausbildung der elektrisch leitenden Funktionsschicht als Heizelement wird somit der darüber liegende Bezug unmittelbar von der Funktionsschicht beheizt. Damit entsteht die Heizwirkung dicht unter der Oberfläche, was zu kurzen Aufheizzeiten bei geringem Energieeinsatz führt. Sofern die Funktionsschicht als Sensor ausgebildet ist, liegt ebenfalls eine unmittelbare Anlage der Funktionsschicht am Bezug vor, wodurch Verfälschungen der Messergebnisse vermieden werden. Da eine solche Funktionsschicht sehr dünn und elastisch ausgebildet ist, wird kein zusätzlicher Schaum zwischen Funktionsschicht und Bezug benötigt.

Das Layout bzw. die Topographie der gedruckten Leiterbahnen kann erfindungsgemäß exakt an die jeweilige Aufgabenstellung, zum Beispiel Heizung oder Sensor und die vorhandene Kontur und Fläche des Korpus aus Formschaum angepasst werden. Hingegen braucht der verwendete Bezug und insbesondere dessen Nahtverläufe nicht berücksichtigt zu werden, dieser kann vielmehr in weiten Grenzen frei gestaltet werden.

Nach einem Vorschlag der Erfindung werden die Elektroden zur Kontaktierung der elektrisch leitenden Funktionsschicht ebenfalls auf die Trägerfolie gedruckt und von einer aushärtend getrockneten elektrisch leitfähigen Paste gebildet. Diese können bei Festlegung des Druckbildes für die Leiterbahnen an einer geeigneten Position zum Beispiel im nicht sichtbaren Bereich angeordnet und unmittelbar im Druckbild berücksichtigt werden.

Die leitfähige Paste kann nach einem Vorschlag der Erfindung elektrisch leitfähige Partikel in einer Polymermatrix umfassen, wobei die leitfähige Paste darüber hinaus für die Ausgestaltung als Heizelement insbesondere Graphitpartikel oder andere schwach leitfähige Partikel und für die Ausbildung der hoch leitfähigen Elektroden oder zur Ausbildung von Sensoren Silberpartikel o. ä. sehr leitfähige Partikel oder Strukturen enthalten kann.

Es kann vorgesehen sein, die leitfähigen Pasten einschichtig oder ggf. auch mehrschichtig auf die Trägerfolie zu drucken, um die gewünschten Leiterbahnen zu erhalten. Beispielsweise kann eine erste Schicht aus einer hoch leitfähigen Paste auf die Trägerfolie aufgedruckt werden, um Leiterbahnen für die Kontaktierung mit Anschlussleitungen und für die Zuleitung zu Widerstandsheizelementen auszubilden. Auf diese Schicht kann sodann z.B. eine weitere Schicht aus einer für Heizanwendungen geeigneten Paste aufgedruckt werden, um ein oder mehrere Widerstandsheizelemente zu bilden. Das Druckbild selbst ist dabei stets frei wählbar und vorzugsweise streifen- bzw. linienförmig.

Die Trägerfolie kann aus geeigneten Kunststoffen, z.B. Polyolefinen, Polyester oder Polyurethan bestehen.

Die Pasten können durch geeignete Druckverfahren, wie z.B. Siebdruck, auf die Trägerfolie aufgebracht werden. Die Schichtstärker der getrockneten Paste sollte vorzugsweise im Bereich 5-30 µm liegen.

Mit Vorteil werden die gedruckten Pasten der elektrisch leitenden Funktionsschicht unmittelbar auf den Korpus aufgelegt und mit diesem haftfest verbunden, zum Beispiel durch (Thermo-) Kaschieren. Es kann auch eine Klebeverbindung vorgesehen werden. Die Trägerfolie liegt sodann auf der dem Bezug zugewandten Oberseite und kann nach einem weiteren Vorschlag der Erfindung auch nach dem Verbinden der gedruckten Pasten mit dem Korpus abgezogen werden, wodurch die gedruckten Pasten und die daraus gebildeten Leiterbahnen auf dem Korpus freigelegt werden. Somit erfüllt die Trägerfolie lediglich die Funktion als Druckträger und wird in einem Transferprozess nach dem Aufbringen auf den aus Formschaum gebildeten Korpus wieder entfernt, sodass nur die gedruckten Pasten bzw. Leiterbahnen auf dem Korpus verbleiben.

Das erfindungsgemäße Polsterelement kann verschiedenste elektrisch leitende Funktionsschichten umfassen, wobei insbesondere mittels der Leiterbahnen ein Heizelement, ein Belegungs- oder Annäherungssensor, ein Temperatursensor, ein Feuchtigkeitssensor, ein Dehnungssensor, ein Herzfrequenzsensor und/oder eine Antenne ausgebildet werden kann.

Das erfindungsgemäße Verfahren zur Herstellung eines Polsterelements zeichnet sich dadurch aus, dass auf den bereitgestellten Korpus aus einem Formschaum eine elektrisch leitende Funktionsschicht haftfest aufgebracht wird, die durch Bedrucken einer elektrisch nichtleitenden Trägerfolie mit auf die Trägerfolie gedruckten und aushärtend getrockneten Leiterbahnen aus mindestens einer elektrisch leitfähigen Paste gebildet wird. Anschließend wird der Bezug sichtseitig unter Zwischenlage der Funktionsschicht auf den Korpus aufgebracht.

Nach einem weiteren Vorschlag der Erfindung werden die Leiterbahnen bzw. die gedruckten Pasten auf den Korpus aufgelegt und mit diesem haftfest verbunden, sodass die Trägerfolie auf der dem Bezug zugewandten Oberfläche angeordnet wird.

Nach einem weiteren Vorschlag kann sodann die Trägerfolie nach dem Verbinden der gedruckten Pasten mit dem Korpus durch Abziehen entfernt werden, sodass die Leiterbahnen freigelegt werden und am Korpus haftfest verbleiben.

Das vorangehend erläuterte Polsterelement kann insbesondere als Fahrzeugsitzbauteil, beispielsweise als Motorradsitz, als Sitz für Pkw und Lkw, als Automobilinnenraumteil, als Sitz oder Sitz Bauteil für Luftfahrzeuge, öffentliche Verkehrsmittel, Schiffe, öffentliche Einrichtungen, als Möbelbauteil zum Beispiel für Polstermöbel oder Massageliegen oder auch für Sportgeräte verwendet werden.

Weitere Einzelheiten der Erfindung werden nachfolgend anhand der ein Ausführungsbeispiel darstellenden Zeichnung erläutert.

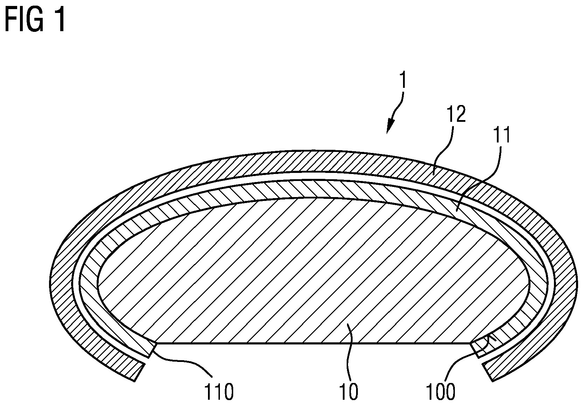

Die einzige Figur zeigt dabei in einer schematisierten, vereinfachten Darstellung eine Motorradsitzbank im Querschnitt, die einen Korpus 10 aus einem Formschaum umfasst, der sichtseitig mit einem Bezug 12 überzogen ist. Bei diesem Bezug 12 kann es sich um ein komplexes Flächengebilde mit einer Vielzahl von Nähten handeln, die entweder nur optische Funktion erfüllen oder den Bezug aus einer Vielzahl von Einzelteilen zusammenfügen.

Zwischen Bezug 12 und Korpus 10 ist eine elektrisch leitende Funktionsschicht 11 angeordnet, die in nicht näher dargestellter Weise von einer elektrisch nichtleitenden Trägerfolie und auf diese elektrisch nichtleitende Trägerfolie aufgedruckten elektrisch leitfähigen Leiterbahnen gebildet ist. Die Leiterbahnen werden von einer elektrisch leitfähigen Paste gebildet, die auf die Trägerfolie nach Maßgabe eines den Verlauf der Leiterbahnen wiedergebenden Druckbildes aufgedruckt und durch Trocknen ausgehärtet worden sind.

Wesentlich ist es, dass die elektrisch leitende Funktionsschicht 11 haftfest auf die Oberfläche 100 des Korpus 10 aufgebracht ist, beispielsweise durch Kaschieren, wobei weiter bevorzugt die gedruckten Leiterbahnen unmittelbar auf der Oberfläche des Korpus 10 zum Liegen kommen und die Trägerfolie die dem Bezug 12 zugewandte Aussenoberfläche bildet. Die solchermaßen gebildete Einheit aus Korpus 10 und haftfest aufgebrachter elektrisch leitender Funktionsschicht 11 wird anschließend vom Bezug 12 sichtseitig überzogen, der jedoch keine vollflächige Verbindung zum Korpus 10 oder der Funktionsschicht 11 aufweist, sondern diese lediglich sichtseitig einhüllt. Insofern braucht auf den Verlauf der Nähte im Bezug 12 bei der Gestaltung der elektrisch leitenden Funktionsschicht 11 keine Rücksicht genommen zu werden.

Beispielsweise im Bereich der nicht sichtbaren Ränder 110 können Elektroden für die elektrische Kontaktierung der Leiterbahnen vorgesehen sein, die ebenfalls auf die Trägerfolie gedruckt und von einer geeigneten elektrisch leitfähigen Paste gebildet sind.

Auch kann vorgesehen sein, nach dem Aufbringen der Funktionsschicht 11 auf den Korpus 10, d. h. dem Verbinden der gedruckten Leiterbahnen mit der Oberfläche 100 des Korpus 10 die Trägerfolie der Funktionsschicht 11 abzuziehen und insoweit die mit der Oberfläche 100 des Korpus 10 verbundenen Leiterbahnen der Funktionsschicht 11 freizulegen, bevor der Bezug 12 über die solchermaßen gebildete Einheit aus Korpus 10 und Leiterbahnen der Funktionsschicht 11 angeordnet wird.

Mit einem solchen Aufbau ist es möglich, den Bezug 12 des Polsterelements 1 elektrisch zu beheizen, wozu die Leiterbahnen der elektrisch leitenden Funktionsschicht 11 insbesondere aus einer elektrisch leitfähigen Paste enthaltend Graphitpartikel oder andere schwach leitfähige Partikel gebildet werden, die einen entsprechend hohen Widerstand aufweisen und bei Stromdurchfluss mit entsprechender Temperaturerhöhung reagieren. Die zur Kontaktierung verwendeten Elektroden können hingegen aus einer leitfähigen Paste enthaltend Silberpartikel o. ä. hoch leitfähige Materialien gebildet werden.

In gleicher Weise ist es auch möglich, statt eines Heizelements aus der elektrisch leitenden Funktionsschicht 11 einen Sensor zu erstellen, beispielsweise einen Belegungs- oder Annäherungssensor, einen Temperatursensor, einen Feuchtigkeitssensor, einen Dehnungssensor, einen Herzfrequenzsensor und/oder eine Antenne.

Da die Gestaltung und insbesondere der Nahtverlauf im Bezug 12 bei der Anordnung der Leiterbahnen der Funktionsschicht 11 auf dem Korpus 10 nicht berücksichtigt werden muss, kann die Topographie der Leiterbahnen und der Elektroden aus der elektrisch leitfähigen Paste in Anpassung an den gewählten Einsatzzweck und die vorhandene Fläche und Kontur des Korpus nahezu frei gewählt und optimiert werden und als Druckmuster der elektrisch leitfähigen Paste auf die Trägerfolie übertragen und auf dem Korpus fixiert werden, bevor der Bezug angebracht wird.

### Bezugszeichenliste:

- 1: Polsterelement
- 10: Korpus
- 11: Funktionsschicht
- 12: Bezug
- 100: Korpusoberfläche
- 110: Randbereich

## Patentansprüche

1. Polsterelement (1), umfassend einen aus einem Formschaum gebildeten Korpus (10), der sichtseitig mit einem Bezug (12) überzogen ist, **dadurch gekennzeichnet, dass** auf den Korpus (10) unterhalb des Bezugs (12) eine elektrisch leitende Funktionsschicht (11) haftfest aufgebracht ist, die mittels Elektroden kontaktierbar ist und von einer elektrisch nicht leitenden Trägerfolie und auf die Trägerfolie gedruckten und aushärtend getrockneten Leiterbahnen aus mindestens einer elektrisch leitfähigen Paste gebildet ist.

2. Polsterelement (1) nach Anspruch 1, **dadurch gekennzeichnet, dass** die Elektroden ebenfalls auf die Trägerfolie gedruckt und von einer aushärtend getrockneten elektrisch leitfähigen Paste gebildet sind.

3. Polsterelement (1) nach Anspruch 1 oder 2, **dadurch gekennzeichnet, dass** die leitfähige Paste elektrisch leitfähige Partikel in einer Polymermatrix umfasst.

4. Polsterelement (1) nach einem der Ansprüche 1 bis 3, **dadurch gekennzeichnet, dass** die leitfähige Paste Graphitpartikel und/oder Silberpartikel enthält.

5. Polsterelement (1) nach einem der Ansprüche 1 bis 4, **dadurch gekennzeichnet, dass** die gedruckten Pasten auf den Korpus (10) aufgelegt und mit diesem haftfest verbunden werden.

6. Polsterelement (1) nach Anspruch 5, **dadurch gekennzeichnet, dass** die gedruckten Pasten der Funktionsschicht (11) nach dem Verbinden mit dem Korpus (10) durch Abziehen der Trägerfolie freigelegt sind.

7. Polsterelement (1) nach einem der Ansprüche 1 bis 6, **dadurch gekennzeichnet, dass** mittels der Leiterbahnen ein Heizelement, ein Belegungs- oder Annäherungssensor, ein Temperatursensor, ein Feuchtigkeitssensor, ein Dehnungssensor, ein Herzfrequenzsensor und/oder eine Antenne ausgebildet ist.

8. Verfahren zur Herstellung eines Polsterelements (1), welches einen aus einem Formschaum gebildeten Korpus (10) aufweist, der sichtseitig mit einem Bezug (12) überzogen ist, **dadurch gekennzeichnet, dass** auf den Korpus (10) eine elektrisch leitende Funktionsschicht (11) haftfest aufgebracht wird, die mittels Elektroden kontaktiert wird und durch Bedrucken einer elektrisch nicht leitenden Trägerfolie mit auf die Trägerfolie gedruckten und aushärtend getrockneten Leiterbahnen aus mindestens einer elektrisch leitfähigen Paste gebildet wird und anschließend der Bezug (12) sichtseitig unter Zwischenlage der Funktionsschicht (11) auf den Korpus aufgebracht (10) wird.

9. Verfahren nach Anspruch 8, **dadurch gekennzeichnet, dass** die gedruckten Pasten auf den Korpus (10) aufgelegt und mit diesem haftfest verbunden werden.

10. Verfahren nach Anspruch 9, **dadurch gekennzeichnet, dass** die Trägerfolie nach dem Verbinden der gedruckten Pasten mit dem Korpus (10) entfernt wird und die gedruckten Pasten am Korpus (10) verbleiben.

11. Verfahren nach einem der Ansprüche 8 bis 10, **dadurch gekennzeichnet, dass** die Leiterbahnen zur Ausbildung eines ein Heizelements, eines Belegungs- oder Annäherungssensors, eines Temperatursensors, eines Feuchtigkeitssensors, eines Dehnungssensors, eines Herzfrequenzsensors und/oder einer Antenne gedruckt werden.

12. Verwendung eines Polsterelementes (1) nach einem der vorangehenden Ansprüche als Fahrzeugsitzbauteil, als Automobilinnenraumteil, als Möbelbauteil oder als Bauteil eines Sportgeräts.
